Europäisches Patentamt

European Patent Office

Office européen des brevets

(11) Veröffentlichungsnummer: **0 256 274**
**A1**

(12) **EUROPÄISCHE PATENTANMELDUNG**

(21) Anmeldenummer: **87109565.9**

(22) Anmeldetag: **03.07.87**

(51) Int. Cl.⁴: **A01D 78/10**

(30) Priorität: **26.07.86 DE 8620133 U**

(43) Veröffentlichungstag der Anmeldung:
**24.02.88 Patentblatt 88/08**

(84) Benannte Vertragsstaaten:
**AT DE FR**

(71) Anmelder: **Fella-Werke GmbH**
**Fellastrasse 2**
**D-8501 Feucht(DE)**

(72) Erfinder: **Pürrer, Josef**
**Andreas-Schramm-Strasse 33**
**D-8501 Feucht(DE)**
Erfinder: **Kuntze, Karl-Heinz**
**Innere-Weissensee-Strasse 31**
**D-8501 Feucht(DE)**

(74) Vertreter: **Czowalla . Matschkur Patentanwälte**
**Dr.-Kurt-Schumacher-Strasse 23 Postfach**
**9109**
**D-8500 Nürnberg 11(DE)**

(54) **Rauh- oder Grünfuttererntemaschine.**

(57) Die Erfindung bezieht sich auf eine Rauh-oder Grünfuttererntemaschine mit einem zum Anbau an die Dreipunkteinrichtung eines Schleppers dienenden, an ihrem Rahmen angeordneten Dreipunktbock, der um eine etwa vertikale und eine horizontale Achse gegenüber dem Rahmen schwenkbar ist, wobei die Schwenkbewegung durch einen mit einer mindestens eine Raste aufweisenden Kulisse des einen Teils des Rahmens zusammenwirkenden Anschlag des anderen Teils begrenzt wird, wobei die Kulisse (27,28) auswechselbar am Maschinenrahmen oder an dessen Dreipunktbock (5) angeordnet ist.

FIG. 2

EP 0 256 274 A1

## Rauh-oder Grünfuttererntemaschine

Die Erfindung richtet sich auf eine Erntemaschine für Rauh-oder Grünfutter mit einem zum Anbau an die Dreipunkteinrichtung des Schleppers dienenden, an ihrem Rahmen angeordneten Dreipunktbock, der um eine etwa vertikale und eine horizontale Achse gegenüber dem Rahmen - schwenkbar ist, wobei diese Schwenkbewegung durch einen mit einer mindestens eine Raste aufweisenden Kulisse des einen Teils des Rahmens zusammenwirkenden Anschlag des anderen Teils begrenzt wird..

Bei der Heuwerbung oder der Ernte von der Silagegewinnung dienendem Grünfutter werden Erntemaschine verschiedener Systeme verwendet. Einfachere Bauformen solcher Maschinen laufen auf Stützrädern und sind über eine Zugdeichsel an der Schlepperrückseite angehängt. Dadurch laufen sie dem fahrenden Schlepper problemlos nach. Modernere Erntemaschinen hingegen sind besonders kompakt gebaut und dienen zum Anbau an die Dreipunkteinrichtung des Schleppers, mit deren Hilfe sie leicht ausgehoben und in Außerbetrieb-Stellung mühelos transportiert werden können. Dem Anbau an die Dreipunkteinrichtung eignet sich bevorzugt ein in den Maschinenrahmen integrierter Dreipunktbock, an dessen beide nach unten weisenden Schenkel die Unterlenker und an dessen oben liegender Spitze der Oberlenker der Dreipunkteinrichtung angekoppelt sind. Aus dieser Konstruktion folgt zunächst eine starre Verbindung der Maschine mit dem Schlepper. Sie läuft dessen Bewegungen nicht mehr einfach nach, sondern führt bei Lenkbewegungen des Schleppers Schwenkbewegungen zur Kurvenaußenseite aus, was insbesondere bei der Arbeit höchst nachteilig ist. Um diesem Mangel aubzuhelfen, ist bei modernen Maschinen der Dreipunktbock um eine etwa vertikale Achse schwenkbar mit dem Rahmen verbunden, so daß sich für die Maschine ein dem Nachlaufsystem etwa entsprechendes Bewegungsspiel gegenüber dem Schlepper ergibt. Der einwandfreie Transport der ausgehobenen Maschine setzt allerdings voraus, daß diese Beweglichkeit um die vertikale Achse in dieser Außergebrauchs-Stellung der Maschine aufgehoben wird. Zu diesem Zweck ist der Dreipunktbock zusätzlich um eine etwa waagrecht verlaufende Achse schwenkbar gegenüber dem Rahmen verbunden. Beim Ausheben der Maschine knickt der Rahmen um diese horizontale Achse gegenüber dem Dreipunktbock ab und kann durch einen entsprechenden Anschlag des Rahmens oder Bockes, der bei dieser Abknickbewegung in eine zugehörige Raste des jeweils anderen Teils einfällt, so festgelegt werden, daß eine seitliche Verschwenkung verhindert wird.

Zu diesem Zweck dienen bei bekannten Erntemaschine zwei unterschiedliche Konstruktionen. Bei einer ersten Ausführungsform ist eine Kulisse mit einer mittleren Raste versehen, in die der Anschlag unter dem Gewicht des beim Ausheben abknickenden Rahmens zwangsläufig hineinbewegt wird. Die Maschine nimmt dann stets die neutrale oder Mittellage ein, die etwa der Längsachse des Schleppers entspricht. Bei größeren Maschinen und insbesondere bei deren Gebrauch in Hanglagen wirkt sich das schlagartige Einrasten des Anschlags als erhebliche Stoßbeanspruchung aus, die sich auf den Schlepper überträgt und als höchst unangenehm empfunden wird. Deshalb bedient sich eine andere Ausführungsform einer Kulisse mit mehreren nebeneinander angeordneten Rasten, die im allgemeinen auf einem Kreisbogen angeordnet sind. Die Maschine kann dann beim Ausheben in der von ihr jeweils eingenommenen Stellung gegenüber der Längsachse des Schleppers verbleiben und in die nächstgelegene Raste einfallen. Ein zusätzliches Verschwenken der Maschine entfällt bei dieser Ausführungsform. Soll dann allerdings, z.B. für den Straßentransport, die Maschine in der Mittellage der Kulisse einrasten, muß die Maschine durch kurze Vorwärtsfährt des Schleppers in die dessen Längsachse entsprechende Mittellage gebracht werden, bevor sie ausgehoben wird. Beide Ausführungsformen weisen ihre Vorzüge auf, doch sind diese weitgehend von der vorherrschenden Betriebsform und Geländeart abhängig. Beim Kauf der Maschine muß sich der Benutzer für die eine oder andere Ausführungsform entscheiden, die der Händler im allgemeinen vorrätig hält. Dies führt durch eine notwendige Lagerhaltung zu einem erhöhten Aufwand. Um diesen Problemen zu entgehen, sieht die Erfindung vor, die Kulisse auswechselbar am Rahmen anzuordnen. Es steht in diesem Fall dem Benutzer frei, von welcher Ausführungsform er jeweils Gebrauch zu machen wünscht, und es bedarf lediglich der Auswechslung der Kulissenteile, was bei Anwendung üblicher Schnellverschlüsse außerordentlich unproblematisch ist und keines hohen Arbeits-und Zeitaufwandes bedarf.

Als besonders vorteilhaft hat es sich im Rahmen dieses allgemeinen Gedankens der Erfindung erwiesen, zwei eine unterschiedliche Anzahl von Rasten aufweisende Kulissen zu einem Bauteil zu vereinigen. Auf diese Weise wird ein zusätzliches Konstruktionsteil entbehrlich. Dieses kann auch nicht bei Nichtgebrauch in Verlust geraten, sondern ist jeweils verfügbar, da stets die eine Kulisse gegenüber der anderen, die beide eine bauliche Einheit bilden, austauschbar ist. Es liegt im Rahmen dieser Gedanken, daß das zwei Kulissen aufweisende Bauteil um etwa 180° schwenkbar sowie in den Endstellungen arretierbar am Rahmen gelagert ist. Dadurch wird das Auswechseln der unterschiedlichen Kulissen gegeneinander außerordentlich vereinfacht. Im Gebrauch muß lediglich die Arretierung gelöst werden, um das Bauteil so zu verschwenken, daß die eine Kulisse an die Stelle der jeweils anderen tritt. In der Endstellung dieser Schwenkbewegung erfolgt zweckmäßig eine Arretierung, so daß sich eine zuverlässige Handhabung ergibt.

Die Erfindung sieht darüber hinaus vor, daß das die beiden Kulissen aufweisende Bauteil unter Federkraft auf einem Träger des Rahmens aufliegt und entgegen dieser Federkraft aus der Arretierung aushebbar sowie verschwenkbar gelagert ist. Dieser Erfindungsgedanke läßt sich konstruktiv in besonders einfacher Weise verwirklichen, wenn beispielsweise das die beiden Kulissen tragende Bauteil als flache Platte ausgebildet ist und auf einem plattenförmigen Träger aufliegt sowie beide durch eine zentrische Drehachse verbunden sind. Die Arretierung kann im einfachsten Fall aus am einen Bauteil angeordneten Nocken und diesen zugeordneten, am anderen Bauteil vorgesehenen Nuten oder Rasten für die Nocken bestehen. Diese Arretierung kann entgegen der Federkraft leicht aufgehoben werden, um die Platten soweit verschwenken zu können, daß die Verrastung in einer um etwa 180° abweichenden Schwenkstellung von neuem erfolgt.

Schließlich sieht die Erfindung vor, daß die Kulisse einen Sperriegel zum Verriegeln des mit der Raste in Eingriff befindlichen Anschlags aufweist. Daraus folgt, daß selbst in ausgehobenem Zustand sich die Maschine nicht aus ihrer Schwenkstellung befreien kann.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen:

Fig. 1 einen Schlepper mit angebauter Erntemaschine in schematischer Draufsicht;

Fig. 2 den Dreipunktbock des Maschinenrahmens in abgebrochener perspektivischer Darstellung;

Fig. 3 zwei gegeneinander austauschbare Kulissen;

Fig. 4 ein Bauteil, welches zwei unterschiedliche ausgebildete Kulissen in sich vereinigt;

Fig. 5 eine abgewandelte Ausführungsform einer solchen Kulisse in ihrer Anordnung am Rahmen;

Fig. 6 eine weitere Ausführungsform eines zwei Kulissen aufweisenden Bauteils und

Fig. 7 das Bauteil nach Fig. 6 in seiner Anordnung auf dem Träger des Rahmens im Schnitt.

Der Schlepper 1 weist ein stirnseitiges Dreipunktgestänge 2 auf, an welchem eine Heuwerbungsmaschine 3 angebaut ist, deren Rahmen 4 hierzu einen Dreipunktbock 5 aufweist. Die beiden unteren Lenker 6 des Dreipunktgestänges 2 greifen an den nicht dargestellten unteren Enden der beiden Schenkel 7 des Dreipunktbockes 5 an, während der obere Dreipunktlenker 8 etwa an der oberen Spitze 9 des Dreipunktbockes 5 angelenkt ist, was, da an sich bekannt, im einzelnen nicht wiedergegeben wird. Zwischen Rahmen 4 und Dreipunktbock 5 ist ein Gelenk mit einer vertikalen Achse 10 vorgesehen. Der an dem Gelenkteil 11 befestigte Zapfen 12 ist in den beiden Augen 13 des Dreipunktbockes 5 drehbar gelagert. Die Schenkel 14 des Gelenkteils 11 dienen ihrerseits zur Lagerung eines etwa horizontal verlaufenden Lagerzapfens 15, der durch die Augen 16 in dem Rahmen 4 geführt ist. Auf diese Weise ergibt sich für diesen eine praktisch kardanische Lagerung gegenüber dem Drei punktbock 5 mit einer Verschwenkbarkeit um eine vertikale Achse 10 und um eine horizontale Achse 17.

An einer die beiden Schenkel 7 des Dreipunktbockes 5 verbindenden Traverse 20 ist eine Trägerplatte 21 mit einer fensterartigen Öffnung 22 angebracht. In dieses Fenster 22 greift ein Anschlagzapfen 23 ein, der an der Unterseite des Rahmens 4 befestigt ist und im Rahmen seiner Bewegbarkeit innerhalb des Fensters 22 der Platte 21 die Schwenkbewegung zwischen Dreipunktbock 5 und Rahmen 4 begrenzt.

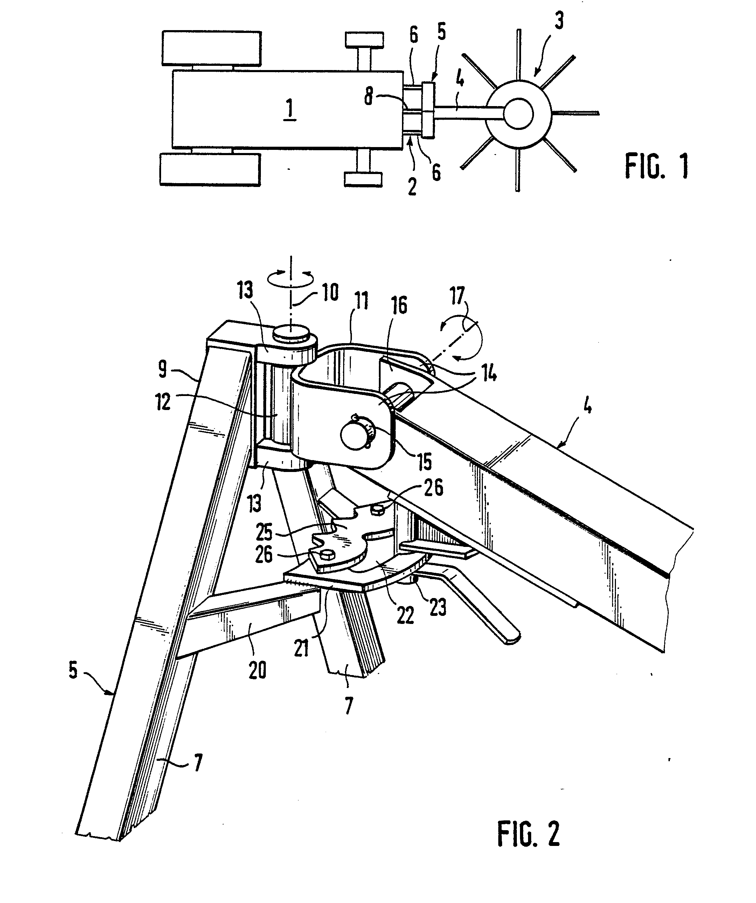

Auf der Trägerplatte 21 ist ein Bauteil 25 mittels zweier Schrauben 26 befestigt, welches in Fig. 4 dargestellt ist. Dieses Bauteil 25 weist an seinen beiden gegenüberliegenden Seiten zwei Kulissen 27 und 28 unterschiedlicher Gestaltung auf. Die Kulisse 27 weist in ihrer Mitte eine Raste 29 auf, die zur Aufnahme des am Rahmen 4 angeordneten Zapfens 23 dient, wenn dieser gegenüber dem Dreipunktbock 5 um die horizontale Achse 17 einknickt. Trifft der zapfenförmige Anschlag nicht exakt in die Raste 29, sondern auf eine der beidseitig dieser angeordneten Kurvenführungen 30, so wird er zwangsläufig in die mittlere Stellung geführt, d.h. zum Eingriff des Anschlagzapfens 23 in die Raste 29 dieser Kulisse 27. In einem unter Zuhilfenahme des Dreipunktgestänges 2 herbeigeführten Aushebezustand der Maschine 3 verbleibt der Anschlag 23 unter dem Gewicht der Maschine 3 in seiner Stellung in der Raste 29. Diese Stellung entspricht dann etwa der in Fig. 1 dargestellten, in welcher sich die Maschine etwa in Übereinstimmung mit der Längsachse des Schleppers befindet. Der Bauteil 25 kann durch Lösen der Schrauben 26 oder an deren Stelle vorgesehener Schnellverschlüsse um 180° verschwenkt werden, so daß die Kulisse 28 in das Fenster 22 des Trägers 21 ragt. Hier hat der Benutzer die Wahl von drei verschiedenen Rasten 31, 32, 33 zur Aufnahme des Anschlagzapfens 23 des Rahmens 4. Während die mittlere Raste 32 der Raste 29 an der Kulisse 27 entspricht, ergibt sich bei Eingriff des Anschlags 23 in eine der beiden äußeren Rasten 31 bzw. 33 eine Winkelstellung zwischen Maschine und Schlepperlängsachse nach der einen oder anderen Seite. Dieser Eingriff ergibt sich insbesondere dann, wenn die Erntemaschine 3 beim Arbeiten in einer Hanglage ausgehoben wird. Auch in diesem Fall ist die Maschine in ausgehobenem Zustand festgelegt.

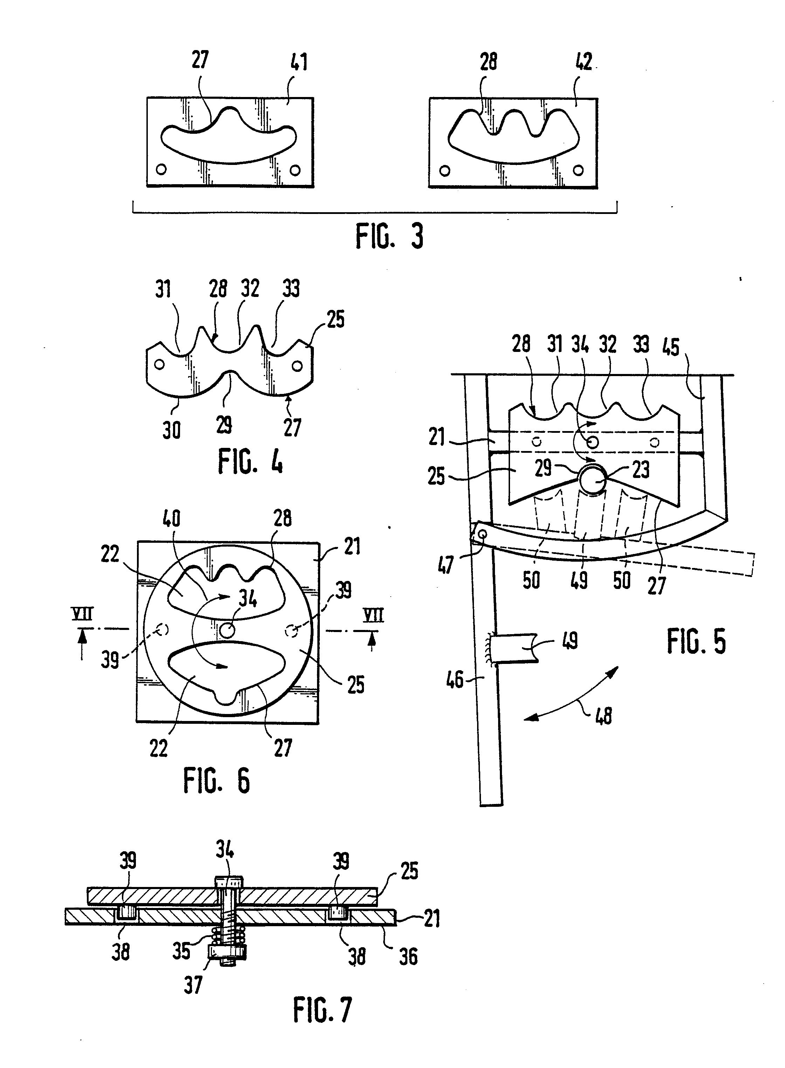

Bei der Ausführungsform nach Fig. 6 bilden die Kulissen 27 und 28 zugleich die fensterartigen Öffnungen 22 zur Führung des Anschlagzapfens 23 des Rahmens 4. Dieses beide Kulissen 27 und 28 vereinigende Bauteil 25 ist um einen zentrischen Lagerbolzen 34 drehbar gelagert, der seinerseits auf der Trägerplatte 21 befestigt ist. Er überragt diesen Träger 21 nach unten und trägt eine Schraubenfeder 35, die einerseits der Unterseite 36 der Platte 21, andererseits der Schraubenmutter 37 anliegt und dadurch das Bauteil 25 unter Anlage auf dem Träger 21 hält. Der Träger weist zwei Bohrungen 38 auf, die im gleichen Abstand von der Drehachse des Bauteils 25 angeordnet und in einem Winkel von 180° gegeneinander versetzt sind. An der Unterseite des Bauteils 25 sind Rastnocken 39 in einer der Stellung der Bohrungen 38 entsprechenden Anordnung angebracht. Diese dienen der Arretierung des Bauteils 25 in der gewünschten Winkelstellung gegenüber der Trägerplatte 21. Wird das Bauteil 25 entgegen der Kraft der Feder 35 angehoben, so daß die Arretierung der Nocken 39 in den Bohrungen 38 aufgehoben wird, läßt sich das Bauteil 25 in Pfeilrichtung 40 verschwenken, bis die Nocken 39 erneut in die Bohrungen 38 einrasten. Auf diese Weise kann die jeweils gewünschte Kulisse 27 oder 28 in die gewünschte Gebrauchsstellung gegenüber dem Anschlagzapfen 23 des Rahmens 4 verbracht werden.

An die Stelle der in den Fig. 2 4 5 u. 6 wiedergegebenen Bauteile 25, die jeweils zwei unterschiedliche Kulissen 27 und 28 in sich vereinigen, können auch getrennte Kulissenstücke 41 und 42 Verwendung finden, die gegeneinander ausgetauscht und mit Hilfe beispielsweise der Schraubenbolzen 26 mit der Trägerplatte 21 verbunden werden können. Soll die eine Kulisse 27 tragende Kulissenplatte 41 Verwendung finden, kann diese auch über der Kulissenplatte 42 angebracht werden. Lediglich bei Bevorzugung der Kulisse 28 muß dann bei dieser Ausführungsform der Kulissenträger 42 auf der Trägerplatte 21 befestigt und der weitere Kulissenträger 4i entfernt werden.

Die Fig. 5 zeigt eine weitere Ausführungsform, bei der das Bauteil 25 auf einem Trägerrahmen 45 gelagert ist. An diesem ist ein Schwenkhebel 46 um den Zapfen 47 in Pfeilrichtung 48 schwenkbar gelagert. Dieser Schwenkhebel 46 trägt einen Sperriegel 49, der in der gestrichelt dargestellten Stellung dem mit der Raste 29 in Eingriff befindlichen Anschlagzapfen 23 anliegt und diesen in dieser Stellung verriegelt. Die beidseitig des Anschlags 49 angeordneten weiteren Anschläge 50 dienen der Verriegelung des Anschlags 23 in den Rasten 31 bzw. 33, falls die Kulisse 28 zum Einsatz gelangt.

## Ansprüche

1. Rauh-oder Grünfuttererntemaschine mit einem zum Anbau an die Dreipunkteinrichtung eines Schleppers dienenden, an ihrem Rahmen angeordneten Dreipunktbock, der um eine etwa vertikale und eine horizontale Achse gegenüber dem Rahmen schwenkbar ist, wobei die Schwenkbewegung durch einen mit einer mindestens eine Raste aufweisenden Kulisse des einen Teils des Rahmens zusammenwirkenden Anschlag des anderen Teils begrenzt wird, dadurch gekennzeichnet, daß die Kulisse (27,28) auswechselbar am Maschinenrahmen oder an dessen Dreipunktbock (5) angeordnet ist.

2. Maschine nach Anspruch 1, dadurch gekennzeichnet, daß zwei eine unterschiedliche Anzahl von Rasten (29;31,32, 33) aufweisende Kulissen (27,28) zu einem Bauteil (25) vereinigt sind.

3. Maschine nach Anspruch 1 oder 2, dadurch gekennzeichnet, daß das zwei Kulissen (27,28) aufweisende Bauteil (25) um etwa 180° schwenkbar sowie in den Endstellungen arretierbar am Maschinenrahmen gelagert ist.

4. Maschine nach einem der Ansprüche 2 oder 3, dadurch gekennzeichnet, daß das die beiden Kulissen (27,28) aufweisende Bauteil (25) unter Federkraft (35) auf einem Träger (21,45) aufliegt und entgegen der Federkraft aus der Arretierung aushebbar und verschwenkbar gelagert ist.

5. Maschine nach einem der Ansprüche 1 bis 4, dadurch gekennzeichnet, daß den Kulissen (27 bzw. 28) ein Sperriegel (46) zum Verriegeln des mit der Raste (29;31,32,33) in Eingriff befindlichen Anschlags (23) aufweist.

FIG. 1

FIG. 2

FIG. 3

FIG. 4

FIG. 6

FIG. 5

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | NL-A-6 818 828 (FAHR) <br> * Figuren 1-3; Seite 2, Zeile 34 - Seite 4, Zeile 1 * <br> --- | 1 | A 01 D 78/10 <br> A 01 D 67/00 |
| A | FR-A-2 450 037 (KUHN) <br> * Figuren 1-3; Seite 2, Zeile 40 - Seite 4, Zeile 30 * <br> --- | 1,5 | |
| A | DE-A-2 850 316 (OFREX GROUP) <br> * Figur 3; Seite 5, Zeilen 20-28 * <br> ----- | 2-4 | |

**RECHERCHIERTE SACHGEBIETE (Int. Cl.4)**

A 01 D
A 01 B
B 25 C
B 25 B

Der vorliegende Recherchenbericht wurde für alle Patentansprüche erstellt

| Recherchenort | Abschlußdatum der Recherche | Prüfer |
|---|---|---|
| DEN HAAG | 20-11-1987 | DISSEN H.D. |

EPO FORM 1503 03.82 (P0403)